# FASCICULE DE BREVET EUROPEEN

(11) **EP 4 240 637 B1**
(45) Date de publication et mention de la délivrance du brevet: **04.12.2024**
(21) Numéro de dépôt: 21794362.0
(22) Date de dépôt: 15.10.2021
(51) Int. Cl.: B62D 25/14, B62D 1/16, B62D 65/02

(54) **STRUCTURE AVANT DE VÉHICULE AUTOMOBILE**
FRONTSTRUKTUR EINES KRAFTFAHRZEUGS
FRONT STRUCTURE OF A MOTOR VEHICLE

(30) Priorité: 06.11.2020 FR 2011415
(43) Date de publication de la demande: 13.09.2023
(73) Titulaire: Renault s.a.s, 92100 Boulogne Billancourt (FR); NISSAN MOTOR CO., LTD., Kanagawa 221-0023 (JP)
(72) Inventeur: DE CARVALHO, Sergio, 78084 GUYANCOURT CEDEX (FR); DELORD, Christian, 78640 Villiers-Saint-Frédéric (FR); DERRIEN, Fabrice, 78084 Guyancourt Cedex (FR); GOUZY, Frédéric, 78640 Villiers-Saint-Frédéric (FR); LECHAT, Kevin, 78084 Guyancourt cedex (FR)
(74) Mandataire: Renault Group
(86) Numéro de dépôt international: PCT/EP2021/078698
(87) Numéro de publication internationale: WO 2022/096253

(56) Documents cités:
- DE-A1- 19 630 303
- DE-A1- 19 712 847
- DE-A1- 3 637 162
- GB-A- 2 252 596
- US-A1- 2012 001 453

## Description

L'invention se rapporte à une structure avant d'un véhicule automobile lequel présente un habitacle et un compartiment moteur situés dans le prolongement l'un de l'autre.

Une structure avant exemplaire comprenant les caractéristiques du préambule de la revendication 1 est connue par le document US 2012/001453 A1.

Les structures avant de véhicule automobile connues comprennent un tablier qui vient s'étendre transversalement entre le compartiment moteur et l'habitacle des véhicules. Elles comprennent également deux longerons avant qui viennent s'étendre parallèlement l'un à l'autre, depuis le tablier, dans le compartiment moteur et selon une direction longitudinale du véhicule. Aussi, ces structures comportent une colonne de direction et une crémaillère reliées ensemble au niveau d'un bol de direction ménagé dans le tablier. La colonne de direction se prolonge dans l'habitacle jusqu'à un volant de conduite, tandis que la crémaillère s'étend jusqu'aux roues avant afin de pouvoir les orienter.

Le bol de direction est ménagé dans le tablier au droit de la colonne de direction et il vient s'étendre en saillie dans le compartiment moteur entre les longerons, mais au voisinage de la liaison entre le tablier et l'un desdits longerons, le longeron gauche en particulier pour les véhicules automobiles à conduite à gauche.

Le bol de direction présente un fond plat dans lequel est ménagé un orifice oblong de manière à pouvoir assurer la liaison entre la colonne de direction et la crémaillère. Du côté du compartiment moteur, le bol de direction présente une bordure qui s'étend autour de l'orifice oblong et contre laquelle vient s'appliquer la crémaillère. Entre les deux, on insère un joint qui, compte tenu des particularités de montage, est adapté à être entraîné en translation contre la bordure par la crémaillère tout en étant comprimé. Un tel montage nécessite une bordure relativement large autour de l'orifice oblong afin d'en assurer la mise en oeuvre et pour obtenir une parfaite étanchéité.

Pour des raisons de confort dans l'habitacle, la colonne de direction supportée par le tablier est ajustée latéralement le plus à gauche possible, dans un véhicule à conduite à gauche par exemple, de manière à libérer de l'espace pour le passager avant.

En revanche, de nouvelles exigences en termes de largeur de roue et/ou de rayon de braquage obligent à rapprocher l'un de l'autre les longerons avant.

Partant, si l'on souhaite conserver le confort précité, des contraintes viennent alors peser sur le bol de direction qui se retrouve alors coincé dans l'angle entre le tablier et le longeron, et dont les dimensions ne peuvent plus être maintenues. Il en va en particulier de la largeur de la bordure qui entoure l'orifice oblong.

En conséquence, le montage précité de la colonne de direction et de la crémaillère est moins aisé.

Aussi, un problème qui se pose et que vise à résoudre la présente invention, est de fournir une structure avant de véhicule automobile qui permette à la fois d'accepter le rapprochement des longerons avant tout en permettant un montage usuel de la crémaillère et de la colonne de direction à travers le bol de direction.

Dans ce but, il est proposé une structure avant d'un véhicule automobile présentant un habitacle et un compartiment moteur s'étendant dans le prolongement dudit habitacle, ladite structure comprenant : un tablier s'étendant transversalement entre ledit compartiment moteur et ledit habitacle et adapté à supporter une colonne de direction ; deux longerons avant sensiblement parallèles reliés audit tablier et s'étendant longitudinalement dans ledit compartiment moteur ; un bol de direction ménagé dans ledit tablier sensiblement au droit de ladite colonne de direction et venant s'étendre en saillie dans ledit compartiment moteur entre lesdits deux longerons près de la liaison entre ledit tablier et l'un desdits longerons, ledit bol de direction présentant un fond et un orifice oblong ménagé dans ledit fond et définissant une bordure s'étendant autour dudit orifice oblong en regard dudit compartiment moteur et ; une crémaillère installée dans ledit compartiment moteur et un joint de crémaillère adapté à venir en prise entre la crémaillère et ledit bol de direction lorsque ladite colonne de direction est reliée à ladite crémaillère à travers ledit orifice oblong. Ladite structure comprend en outre une pièce plate annulaire installée en applique sur ladite bordure et s'étendant autour dudit orifice oblong pour pouvoir élargir la portée de réception dudit joint de crémaillère.

Ainsi, une caractéristique de l'invention réside dans la mise en oeuvre d'une pièce plate annulaire contre la bordure du bol, opposée au fond, et qui puisse s'étendre autour de l'orifice oblong sur une largeur suffisamment grande pour autoriser le montage de la crémaillère et de la colonne selon le protocole usuel. En effet, compte tenu des contraintes dimensionnelles exercées sur le bol de direction, la bordure du bol, opposée au fond et qui s'étend autour de l'orifice oblong, n'est plus suffisamment importante pour pouvoir précisément permettre ce montage usuel. Grâce à la pièce plate annulaire, on vient de la sorte élargir la portée de réception du joint de crémaillère et ainsi permettre ce montage.

Selon un mode de mise en oeuvre de l'invention particulièrement avantageux, lesdits deux longerons définissant un plan moyen, ladite pièce plate annulaire est inclinée par rapport audit plan moyen. Le plan moyen défini par les deux longerons est sensiblement parallèle au plan moyen horizontal du véhicule automobile, et la pièce plate annulaire est inclinée par rapport à ce plan moyen horizontal, d'une valeur comprise entre 40°et 50°par exemple. On expliquer a plus en détail dans la suite de la description comment cette inclinaison permet de faciliter le montage.

Aussi, ledit un desdits longerons et ledit tablier définissant un plan bissecteur, ledit orifice oblong s'étend avantageusement selon une composante comprise dans ledit plan bissecteur. Le plan bissecteur s'étend sensiblement verticalement et il est incliné sensiblement de 45° par rapport à l'axe lon gitudinal du véhicule automobile. Partant, l'orifice oblong s'étend sensiblement en diagonale dans le compartiment moteur, ce qui permet notamment, de faciliter le montage de la crémaillère et de la colonne de direction.

En outre, ledit orifice oblong présente, préférentiellement, une extrémité basse située vers ledit un desdits longerons et une extrémité haute opposée à ladite extrémité basse et écartée dudit un desdits longerons. Un tel agencement permet là encore de faciliter le montage.

En outre, et selon une caractéristique de l'invention particulièrement avantageuse, ladite pièce plate annulaire est reliée à ladite bordure par des points de soudure. La largeur de la bordure du bol de direction permet d'y relier la pièce plate annulaire par des points de soudure, régulièrement espacés les uns des autres tout autour de l'orifice oblong, par exemple au moyen d'une pince de soudage classique à deux électrodes opposées.

Préférentiellement, la structure selon invention comprend un joint de mastic annulaire entre ladite pièce plate annulaire et ladite bordure. Ainsi, le mastic est appliqué par exemple avant la soudure de la pièce plate annulaire et de la bordure du bol de direction. Le mastic assure alors l'étanchéité totale entre la pièce plate annulaire et le bol de direction.

Aussi, ladite pièce plate annulaire présente un bord interne et un bord externe opposé, et la distance minimale entre lesdits deux bords opposés est avantageusement comprise entre 15 mm et 25 mm. Par exemple, cette distance est de 20 mm. Comme on l'expliquera ci-après, une telle largeur permet le montage de la crémaillère et de la colonne de direction selon le protocole usuel où le joint est alors comprimé.

Selon une caractéristique particulièrement avantageuse, ledit bord interne délimite une section identique à la section dudit orifice oblong. Aussi, on vient ajuster la pièce plate annulaire en applique sur la bordure du bol de direction de manière à ce que son bord interne coïncide parfaitement avec l'orifice oblong. Et on soude la pièce plate annulaire avec le bol de direction dans cette position.

Préférentiellement, ladite pièce plate annulaire présente un rebord périphérique. Le rebord périphérique vient s'étendre à l'opposé du bol de direction et permet ainsi de contenir le bord du joint lorsqu'ils se compriment durant le montage de la crémaillère et de la colonne de direction.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique en perspective de dessus d'une partie d'une structure avant de véhicule automobile selon un angle de vue ;
[Fig. 2] est une vue schématique en perspective de dessus d'une autre partie de la structure avant représentée sur la [Fig. 1] ;
[Fig. 3] est une vue schématique en perspective de dessus de ladite une partie de structure avant représentée sur la [Fig. 1] selon un autre angle de vue ;
[Fig. 4] est une vue schématique en perspective d'éléments destinés à être installés sur lesdites parties représentées sur les [Fig. 1] et [Fig. 2] ;
[Fig. 5] est une vue schématique de détail de la [Fig. 3] montrant les éléments de l'invention ;
[Fig. 6] est une vue schématique partielle de côté montrant le mode de montage de l'objet de la [Fig. 4] sur les éléments de l'objet de la [Fig. 5] ; et,
[Fig. 7] est une vue schématique en coupe de l'objet de la [Fig. 4] et des éléments de l'objet de la [Fig. 5] montés.

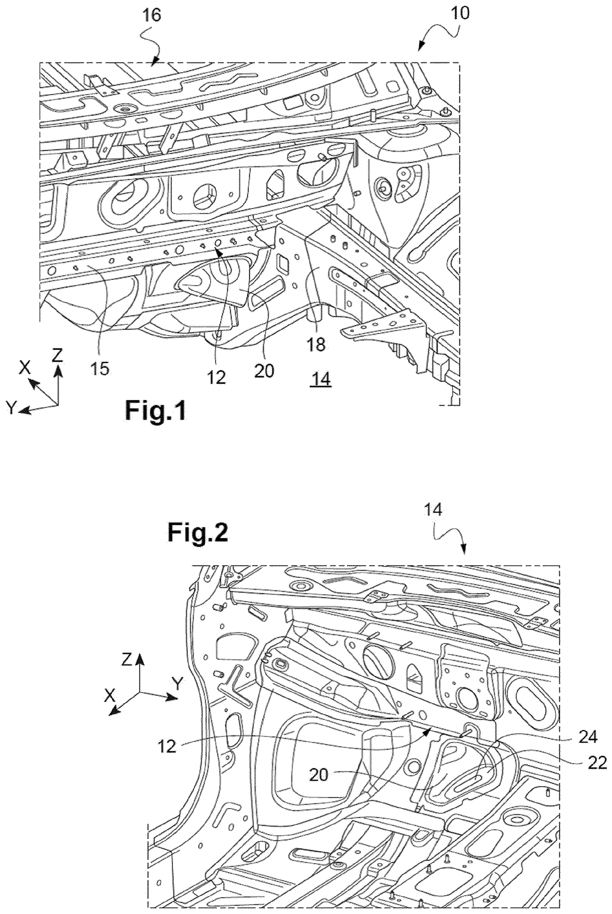

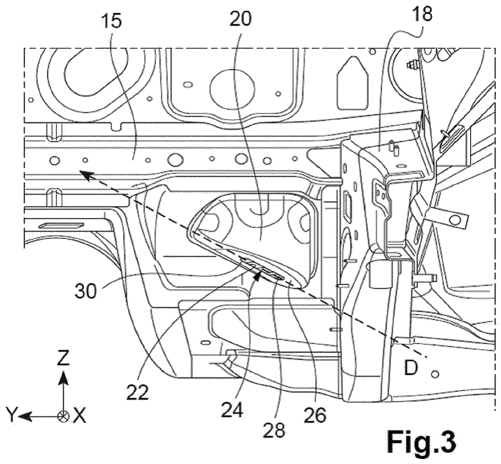

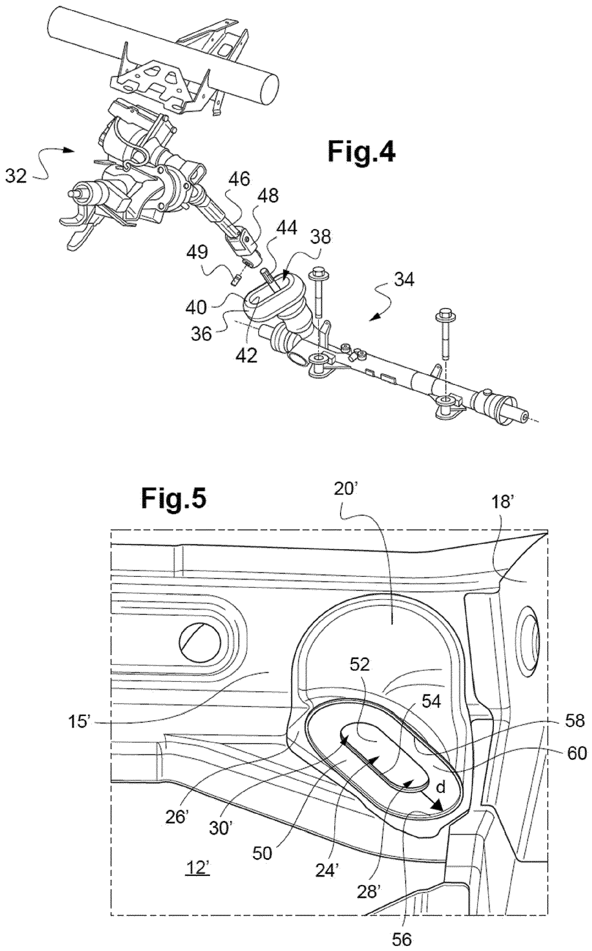

On décrira tout d'abord, en référence aux [Fig. 1], [Fig. 2], [Fig. 3] et [Fig. 4] l'environnement structurel dans lequel se pose le problème que résout l'invention. La [Fig. 1] montre une structure avant 10 de véhicule automobile. La structure avant 10 présente un tablier 12 qui s'étend transversalement et qui vient délimiter un compartiment moteur 14 situé en avant du tablier 12, d'un habitacle 16 situé en arrière du tablier 12. Le tablier présente une traverse de tablier 15.

Aussi, la structure avant 10 de véhicule automobile illustrée sur la [Fig. 1], est orientée dans un repère orthogonal X, Y, Z, de telle sorte que, l'axe X correspond à la direction longitudinale du véhicule et est orienté de l'avant vers l'arrière du véhicule, l'axe Y correspond à la direction transversale et est orienté de la gauche vers la droite du véhicule lorsque l'on regarde vers l'avant du véhicule et, l'axe Z désigne la direction verticale orientée à l'opposé de la surface sur laquelle repose le véhicule dans son état usuel de fonctionnement.

Sur la [Fig. 1] est représenté un longeron avant gauche 18 qui vient s'étendre dans le compartiment moteur 14 depuis la traverse de tablier 15, sensiblement selon la direction de l'axe X, telle que définie ci-dessus. On observera que la traverse de tablier 15 s'étend elle, sensiblement selon la direction de l'axe Y. En outre, est également représenté sur la [Fig. 1], un bol de direction 20 qui s'étend en saillie dans le compartiment moteur 14 au voisinage de la liaison entre la traverse de tablier 15 et le longeron avant gauche 18.

On se référera maintenant à la [Fig. 2], laquelle montre le tablier 12 vu, non plus depuis le compartiment moteur 14, mais depuis l'habitacle 16. On retrouve alors le bol de direction 20 ménagé dans le tablier 12. Le bol de direction 20 est en creux et il présente un fond 22 dans lequel est pratiqué un orifice oblong 24. Le bol de direction 20 définit un logement suffisamment grand pour pouvoir recevoir la main d'un opérateur comme on l'expliquera ci-après. L'orifice oblong 24 débouche lui, dans le compartiment moteur 14 situé en arrière du tablier 12.

On retrouve sur la [Fig. 3] à laquelle on se référera à présent, le bol de direction 20 depuis le compartiment moteur 14. L'angle de vue est selon l'axe X au niveau du longeron avant gauche 18. Aussi, on y retrouve l'orifice oblong 24 et à travers, le fond 22. Et ce dernier, définit une bordure 26 qui vient s'étendre autour de l'orifice oblong 24 dans le compartiment moteur 14. Partant, la bordure 26 est de forme annulaire oblongue.

En outre, il apparaît sur la [Fig. 3] que le plan moyen défini par la bordure 26 est incliné par rapport à un autre plan moyen défini par le longeron avant gauche 18 et la traverse de tablier 15 qu'il rejoint. Cet autre plan moyen est sensiblement horizontal et il est également défini par les deux longerons avant. Autrement dit, ledit plan moyen est incliné vers le centre du compartiment moteur 14. Il est par exemple incliné d'un angle voisin de 45° par rapport à l'axe Z. Partant, l'ori fice oblong 24 s'étend sensiblement selon une direction D appartement à un plan bissecteur, lequel est défini par le longeron avant gauche 18 et la traverse de tablier 15 en s'étendant selon l'axe Z. Ainsi, l'orifice oblong 24 s'étend selon une composante comprise dans le plan bissecteur précité et d'un angle voisin de 45°par rapport à l'axe Z par exemple. Conséquemment, l'orifice oblong 24 présente une extrémité basse 28, située près du longeron avant gauche 18 et une extrémité haute opposée 30.

Avant de décrire plus en détail l'objet de l'invention, en référence à la [Fig. 5], on se référera tout d'abord à la [Fig. 4] montrant une colonne de direction 32 adaptée à être installée sur le tablier 12 dans l'habitacle 16, et une crémaillère 34 adaptée à être installé dans le compartiment moteur 14.

La crémaillère 34 comporte un boîtier oblong 36 de transformation de couple. Le boîtier oblong 36 est adapté à transformer le couple imprimé par la colonne de direction.

Le boîtier oblong 36 présente une ouverture oblongue 38 définissant un bord oblong 40 sur lequel est appliqué un joint d'étanchéité oblong compressible 42. Ce joint d'étanchéité 42 est annulaire.

Aussi, la crémaillère 34 présente un arbre de crémaillère 44 qui vient s'étendre à travers l'ouverture oblongue 38 et en saillie dans une position excentrée de l'ouverture oblongue 38. Ainsi qu'on l'expliquera ci-après, l'arbre de crémaillère 44 est adapté à être engagé à travers l'orifice oblong 24 du bol de direction 20, tandis que le bord oblong 40 muni du joint d'étanchéité oblong compressible 42 vient s'appliquer contre le bol de direction 20.

Du côté de l'habitacle 16, la colonne de direction 32 présente un dernier segment 46 équipé d'un dernier joint de cardan 48. Ce dernier joint de cardan 48 est adapté à être relié à l'arbre de crémaillère 44 à l'intérieur du bol de direction 20, au moyen d'une vis d'accouplement 49, comme on va l'expliquer ci-après.

On se référera à présent à la [Fig. 5], montrant un environnement structurel plus contraignant que celui montré sur les [Fig. 1], [Fig. 2], [Fig. 3] et [Fig. 4], et qui justifie la mise en oeuvre de l'invention. Aussi, les éléments présentés sur la [Fig. 5] et équivalents à ceux des figures précitées, aura les mêmes références affectées d'un signe prime : « ' ».

Aussi, on retrouve sur cette [Fig. 5] plus en détail et vu du compartiment moteur, le tablier 12', le bol de direction 20' situé à la jointure de la traverse de tablier 15' et du longeron avant gauche 18'. Ainsi, le bol de direction 20' est sensiblement plus compacte que celui illustré sur les figures précédentes de manière à ce que le longeron avant gauche 18' ait pu être conçu, dans une position rapprochée de son homologue, le longeron avant droit. Autrement dit, si la position relative du bol de direction 20' et de la colonne de direction, est conservée, le longeron avant gauche 18' est alors rapproché du bol de direction 20' lequel a dû être conçu de manière plus compacte, selon la direction transversale de l'axe Y.

En effet, le rapprochement l'un de l'autre des longerons avant est rendu nécessaire par la mise en oeuvre d'enveloppes d'architecture de roue avant de plus grandes tailles. On retrouve sur cette [Fig. 5] également l'orifice oblong 24' qui s'étend de l'extrémité haute 30' à l'extrémité basse 28' et sa bordure annulaire 26' laquelle est recouverte d'une pièce plate annulaire 50. Cette pièce plate annulaire 50 est également oblongue et elle est installée en applique sur la bordure annulaire 26'.

Aussi, la pièce plate annulaire 50 présente par définition une lumière centrale oblongue 52 définie par un bord interne 54 et dont les dimensions sont identiques à celles de l'orifice oblong 24' du bol de direction 20'. Autrement dit, le bord interne 54 délimite une section ou surface, identique à celle que délimite l'orifice oblong 24'.

De surcroît, la pièce plate annulaire 50 présente un bord externe 56 espacé du bord interne 54 d'une distance sensiblement constante d. La distance d est de préférence comprise entre 15 mm et 25 mm. Elle est par exemple égale à 20 mm.

De plus, la pièce plate annulaire 50 présente un rebord périphérique 58 lequel longe continûment le bord externe 56.

Ainsi, la pièce plate annulaire 50 définit une portée de réception 60 annulaire oblongue et plane, plus étendue que ne l'est la bordure annulaire 26' du bol de direction 20'. Aussi, la pièce plate annulaire 50 s'étend au-delà de la bordure annulaire 26' et du bol de direction 20' pour pouvoir offrir la portée de réception 60 annulaire, d'une dimension supérieure à celle de la bordure annulaire 26'.

Par ailleurs, il est nécessaire que la pièce plate annulaire 50 soit reliée au bol de direction 20' de manière étanche. Aussi, un joint de mastic annulaire non représenté est tout d'abord formé autour de l'orifice oblong 24' sur la bordure annulaire 26' et près du bord de l'orifice oblong 24'. Ensuite, la pièce plate annulaire 50 est appliquée à plat contre la bordure annulaire 26', de façon que l'orifice oblong 24' coïncide parfaitement avec la lumière centrale oblongue 52 de la pièce plate annulaire 50 et en aplatissant le joint de mastic. Puis, la pièce plate annulaire 50 est reliée à la bordure annulaire 26' en formant des points de soudure au moyen d'une pince à souder, autour du joint de mastic annulaire aplati. De la sorte, l'étanchéité est assurée grâce au mastic, et la pièce plate annulaire 50 est solidarisée au bol de direction 20' grâce aux points de soudure. Avantageusement, entre 6 et 10 points de soudure sont réalisés autour du joint de mastic annulaire. Par exemple, huit points de soudure sont réalisés.

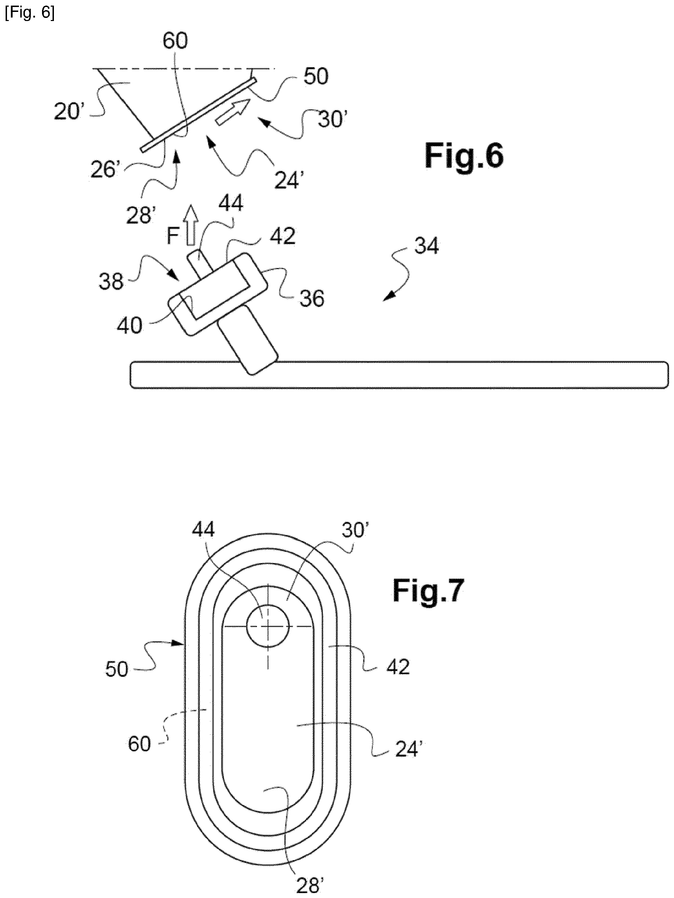

De la sorte, grâce à la portée de réception 60 annulaire oblongue et plane, le montage étanche du boîtier oblong 36 de la crémaillère 34 est grandement facilité, comme on va l'expliquer ci-après en référence aux [Fig. 6] et [Fig. 7] et à l'appui des [Fig. 4] et [Fig. 5].

Ainsi, on retrouve sur la [Fig. 6] de manière schématique, la crémaillère 34 et son boîtier oblong 36 surmonté du joint d'étanchéité oblong compressible 42. On retrouve également l'arbre de crémaillère 44 qui vient s'étendre en saillie de l'ouverture oblongue 38 du boîtier oblong 36.

En outre, on retrouve partiellement sur la [Fig. 6], le bol de direction 20' équipé de la pièce plate annulaire 50 en applique contre la bordure annulaire 26' du bol de direction 20'.

Ainsi, on vient ajuster dans une première phase, le boîtier oblong 36 de manière inclinée en regard de l'orifice oblong 24', et plus précisément l'arbre de crémaillère 44 à l'aplomb de son extrémité basse 28'.

Ensuite, dans une deuxième phase de mouvement on entraîne en translation le boîtier oblong 36, selon l'axe vertical Z, contre la pièce plate annulaire 50 de manière à ce que, l'arbre de crémaillère 44 pénètre à travers l'extrémité basse 28' de l'orifice oblong 24', tandis que le joint d'étanchéité oblong compressible 42 vient en contact à plat avec la portée de réception annulaire 60 de la pièce plate annulaire 50.

Puis, dans une troisième phase de mouvement on vient comprimer le joint d'étanchéité oblong compressible 42 entre le bord oblong 40 du boîtier oblong 36 et la portée de réception annulaire 60, tandis qu'on entraîne en mouvement glissant le bord oblong 40 contre la portée de réception annulaire 60. De la sorte, l'arbre de crémaillère 44 est entraîné en translation vers l'extrémité haute 30' de l'orifice oblong 24' en s'écartant du longeron avant gauche 18', tandis que le joint d'étanchéité oblong compressible 42 comprimé, vient s'ajuster autour de l'orifice oblong 24'.

Autrement dit, la portée de réception annulaire 60 est suffisamment large pour pouvoir recevoir en frottement le joint d'étanchéité oblong compressible 42 jusqu'à son parfait ajustement autour de l'orifice oblong 24'.

De la sorte, comme illustré vue de dessous en coupe sur la [Fig. 7], entre le bord oblong 40 et son joint l'étanchéité oblong 42, et, sur laquelle on retrouve l'arbre de crémaillère 44 s'étendant dans l'extrémité haute 30' de l'orifice oblong 24', le joint d'étanchéité oblong compressible 42 est parfaitement comprimé entre le bord oblong 40 du boîtier oblong 36 et la portée de réception annulaire 60, et il assure ainsi l'étanchéité parfaite entre le boîtier oblong 36 de la crémaillère 34 et le bol de direction 20'.

Aussi, on maintient le boîtier oblong 36 dans cette position où il est comprimé contre la pièce plate annulaire 50, tandis qu'à l'opposé, on vient relier le dernier cardan 48 à l'arbre de crémaillère 44 au moyen de la vis d'accouplement 49. De la sorte, la liaison entre le dernier cardan 48 et l'arbre de crémaillère 44 permet de retenir le boîtier oblong 36 en appui à force contre la pièce plate annulaire 50, tandis que le joint d'étanchéité oblong compressible 42 est comprimé. De la sorte, l'étanchéité est parfaitement assurée entre le boîtier oblong 36 et le bol de direction 20'.

## Revendications

1. Structure avant d'un véhicule automobile présentant un habitacle et un compartiment moteur s'étendant dans le prolongement dudit habitacle, ladite structure avant comprenant :
- un tablier (12') s'étendant transversalement entre ledit compartiment moteur et ledit habitacle et adapté à supporter une colonne de direction ;
- deux longerons avant (18') sensiblement parallèles reliés audit tablier (12') et s'étendant longitudinalement dans ledit compartiment moteur ;
- un bol de direction (20') ménagé dans ledit tablier (12') sensiblement au droit de ladite colonne de direction et venant s'étendre en saillie dans ledit compartiment moteur entre lesdits deux longerons près de la liaison entre ledit tablier (12') et l'un desdits longerons (18'), ledit bol de direction (20') présentant un fond et un orifice oblong (24') ménagé dans ledit fond et définissant une bordure (26') s'étendant autour dudit orifice oblong (24') en regard dudit compartiment moteur et ;
- une crémaillère (34) installée dans ledit compartiment moteur et un joint de crémaillère (42) adapté à venir en prise entre la crémaillère (34) et ledit bol de direction (20') lorsque ladite colonne de direction est reliée à ladite crémaillère à travers ledit orifice oblong (24');
**caractérisée en ce qu'**elle comprend en outre une pièce plate annulaire (50) installée en applique sur ladite bordure (26') et s'étendant autour dudit orifice oblong (24') pour pouvoir élargir la portée de réception dudit joint de crémaillère (42).

2. Structure selon la revendication 1, **caractérisée en ce que**, lesdits deux longerons définissant un plan moyen, ladite pièce plate annulaire (50) est inclinée par rapport audit plan moyen.

3. Structure selon la revendication 1 ou 2, **caractérisée en ce que**, ledit un desdits longerons (18') et ledit tablier (12') définissant un plan bissecteur, ledit orifice oblong (24') s'étend selon une composante comprise dans ledit plan bissecteur.

4. Structure selon l'une quelconque des revendications 1 à 3, **caractérisée en ce que** ledit orifice oblong (24') présente une extrémité basse (28') située vers ledit un desdits longerons (18') et une extrémité haute (30') opposée à ladite extrémité basse et écartée dudit un desdits longerons.

5. Structure selon l'une quelconque des revendications 1 à 4, **caractérisée en ce que** ladite pièce plate annulaire (50) est reliée à ladite bordure (26') par des points de soudure.

6. Structure selon l'une quelconque des revendications 1 à 5, **caractérisée en ce qu'**elle comprend un joint de mastic annulaire entre ladite pièce plate annulaire (50) et ladite bordure (26').

7. Structure selon l'une quelconque des revendications 1 à 6, **caractérisée en ce que** ladite pièce plate annulaire (50) présente un bord interne (54) et un bord externe opposé (56), et **en ce que** la distance minimale entre lesdits deux bords opposés est comprise entre 15 mm et 25 mm.

8. Structure selon la revendication 7, **caractérisée** en ce ledit bord interne (54) délimite une section identique à la section dudit orifice oblong (24').

9. Structure selon l'une quelconque des revendications 1 à 8, **caractérisée en ce que** ladite pièce plate annulaire (50) présente un rebord périphérique (58).

## Patentansprüche

1. Frontstruktur eines Kraftfahrzeugs, das einen Fahrgastraum und einen Motorraum, der sich in der Verlängerung des Fahrgastraumes erstreckt, aufweist, wobei die Frontstruktur umfasst:
- eine Spritzwand (12'), die sich quer zwischen dem Motorraum und dem Fahrgastraum erstreckt und dazu eingerichtet ist, eine Lenksäule zu stützen;
- zwei im Wesentlichen parallele vordere Längsträger (18'), die mit der Spritzwand (12') verbunden sind und sich in Längsrichtung im Motorraum erstrecken;
- eine Lenkschale (20'), die in der Spritzwand (12') im Wesentlichen direkt bei der Lenksäule ausgebildet ist und sich vorstehend zwischen den zwei Längsträgern in der Nähe der Verbindung zwischen der Spritzwand (12') und einem der Längsträger (18') in den Motorraum erstreckt, wobei die Lenkschale (20') einen Boden und eine längliche Öffnung (24'), die in dem Boden ausgebildet ist und eine sich um die längliche Öffnung (24') herum gegenüber dem Motorraum erstreckende Umrandung (26') definiert, aufweist; und
- eine Zahnstange (34), die in den Motorraum eingebaut ist, und eine Zahnstangendichtung (42), die dazu eingerichtet ist, zwischen der Zahnstange (34) und der Lenkschale (20') in Eingriff zu kommen, wenn die Lenksäule durch die längliche Öffnung (24') hindurch mit der Zahnstange verbunden wird;
**dadurch gekennzeichnet, dass** sie außerdem ein ringförmiges flaches Teil (50) umfasst, das auf der Umrandung (26') aufliegend eingebaut ist und sich um die längliche Öffnung (24') herum erstreckt, um den Aufnahmebereich der Zahnstangendichtung (42) verbreitern zu können.

2. Struktur nach Anspruch 1, **dadurch gekennzeichnet, dass**, wenn die zwei Längsträger eine Mittelebene definieren, das ringförmige flache Teil (50) bezüglich der Mittelebene geneigt ist.

3. Struktur nach Anspruch 1 oder 2, **dadurch gekennzeichnet, dass**, wenn der eine der Längsträger (18') und die Spritzwand (12') eine winkelhalbierende Ebene definieren, die längliche Öffnung (24') sich entlang einer Komponente erstreckt, die in der winkelhalbierenden Ebene liegt.

4. Struktur nach einem der Ansprüche 1 bis 3, **dadurch gekennzeichnet, dass** die längliche Öffnung (24') ein niedriges Ende (28') aufweist, das sich auf der dem einen der Längsträger (18') zugewandten Seite befindet, und ein hohes Ende (30'), das dem niedrigen Ende gegenüberliegt und von dem einen der Längsträger entfernt ist.

5. Struktur nach einem der Ansprüche 1 bis 4, **dadurch gekennzeichnet, dass** das ringförmige flache Teil (50) mit der Umrandung (26') durch Schweißpunkte verbunden ist.

6. Struktur nach einem der Ansprüche 1 bis 5, **dadurch gekennzeichnet, dass** sie eine ringförmige Kittfuge zwischen dem ringförmigen flachen Teil (50) und der Umrandung (26') umfasst.

7. Struktur nach einem der Ansprüche 1 bis 6, **dadurch gekennzeichnet, dass** das ringförmige flache Teil (50) einen inneren Rand (54) und einen gegenüberliegenden äußeren Rand (56) aufweist, und dadurch, dass der minimale Abstand zwischen den zwei einander gegenüberliegenden Rändern zwischen 15 mm und 25 mm beträgt.

8. Struktur nach Anspruch 7, **dadurch gekennzeichnet, dass** der innere Rand (54) einen Querschnitt begrenzt, der mit dem Querschnitt der länglichen Öffnung (24') identisch ist.

9. Struktur nach einem der Ansprüche 1 bis 8, **dadurch gekennzeichnet, dass** das ringförmige flache Teil (50) einen umlaufenden Flansch (58) aufweist.

## Claims

1. Front structure of a motor vehicle which has a passenger compartment and an engine compartment which extends in continuation of the passenger compartment, the front structure comprising:
- a bulkhead (12') which extends transversely between the engine compartment and the passenger compartment and which is suitable for supporting a steering column;
- two substantially parallel front side members (18') which are connected to the bulkhead (12') and which extend longitudinally in the engine compartment;
- a steering ball joint (20') which is arranged in the bulkhead (12') substantially in line with the steering column and which protrudes into the engine compartment between the two side members close to the connection between the bulkhead (12') and one of the side members (18'), the steering ball joint (20') having a base and an oblong hole (24') which is provided in the base and which defines an edge (26') which extends around the oblong hole (24') opposite the engine compartment and;
- a rack (34) which is installed in the engine compartment and a rack joint (42) which is capable of engaging between the rack (34) and the steering ball joint (20') when the steering column is connected to the rack via the oblong hole (24');
**characterized in that** it further comprises an annular planar component (50) which is installed in a state applied to the edge (26') and which extends around the oblong hole (24') in order to be able to widen the receiving bearing of the rack joint (42).

2. Structure according to Claim 1, **characterized in that**, the two side members defining a mean plane, the annular planar component (50) is inclined relative to the mean plane.

3. Structure according to Claim 1 or 2, **characterized in that**, one of the side members (18') and the bulkhead (12') defining a bisector plane, the oblong hole (24') extends along a component contained in the bisector plane.

4. Structure according to any one of Claims 1 to 3, **characterized in that** the oblong hole (24') has a lower end (28') which is located toward one of the side members (18') and an upper end (30') which is opposite the lower end and which is spaced apart from one of the side members.

5. Structure according to any one of Claims 1 to 4, **characterized in that** the annular planar component (50) is connected to the edge (26') by weld points.

6. Structure according to any one of Claims 1 to 5, **characterized in that** it comprises an annular mastic joint between the annular planar component (50) and the edge (26').

7. Structure according to any one of Claims 1 to 6, **characterized in that** the annular planar component (50) has an inner edge (54) and an opposing outer edge (56), and **in that** the minimum distance between the two opposing edges is between 15 mm and 25 mm.

8. Structure according to Claim 7, **characterized in that** the inner edge (54) delimits a cross section which is identical to the cross section of the oblong hole (24').

9. Structure according to any one of Claims 1 to 8, **characterized in that** the annular planar component (50) has a peripheral edge (58).
